# FASCICULE DE BREVET EUROPEEN

(11) **EP 1 987 565 B1**
(45) Date de publication et mention de la délivrance du brevet: **28.09.2011**
(21) Numéro de dépôt: 07730983.9
(22) Date de dépôt: 15.02.2007
(51) Int. Cl.: H01Q 1/24, H04M 1/02

(54) **TERMINAL DE TELEPHONIE CELLULAIRE ET DE RECEPTION MULTIMEDIA**
ENDGERÄT FÜR MOBILTELEFONIE UND MULTIMEDIA-EMPFANG
CELLULAR TELEPHONY AND MULTIMEDIA RECEIVER TERMINAL

(30) Priorité: 22.02.2006 FR 0601545
(43) Date de publication de la demande: 05.11.2008
(73) Titulaire: Apple Inc., Cupertino, CA 95014 (US)
(72) Inventeur: ROMAO, Fernando, F-78360 Montesson (FR)
(74) Mandataire: Lang, Johannes
(86) Numéro de dépôt international: PCT/FR2007/000272
(87) Numéro de publication internationale: WO 2007/096503

(56) Documents cités:
- EP-A- 1 612 882
- GB-A- 2 406 748
- US-A1- 2005 097 609

## Description

La présente invention concerne un terminal de téléphonie cellulaire et de réception multimédia.

### ARRIERE PLAN DE L'INVENTION

On connaît des terminaux de téléphonie cellulaire et de réception multimédia. Afin d'assurer un bon fonctionnement du terminal et un confort de l'utilisateur, il est connu de réaliser un terminal comprenant un boîtier comportant deux parties ayant une forme générale parallélépipédique avec des faces principales rectangulaires, les deux parties de boîtier comportant des moyens de liaison pour que les deux parties de boîtier soient mobiles l'une par rapport à l'autre entre une position ré tractée dans laquelle les deux parties de boîtier sont superposées et une position déployée dans laquelle les deux parties de boîtier sont dans le prolongement l'une de l'autre en étant accolées selon un petit côté des fa ces principales, le terminal comportant en outre une uni té de traitement reliée à une antenne de téléphonie cellulaire et à une antenne de réception multimédia. Pour minimiser l'encombrement global du terminal, l'unité de traitement et les antennes sont généralement disposées dans la même partie de boîtier, ce qui permet de minimiser l'épaisseur de l'autre partie de boîtier, les antennes étant disposées au voisinage de deux côtés opposés afin de minimiser le couplage entre les antennes.

La demande de brevet américaine US2005/097609 décrit une unité d'antenne de TV intégrée et antennes de communication pour les terminaux de communication portables. L'unité d'antenne comprend une antenne de télévision et une antenne de communication. L'antenne TV comprend une antenne tige pour recevoir un signal TV, et une antenne guide pour recevoir le signal TV à partir de l'antenne tige et la transmission du signal de télévision reçu à un tuner TV. L'antenne de communication comprend une antenne hélicoïdale pour recevoir un signal de communication, et un connecteur pour recevoir le signal de communication de l'antenne hélicoïdale et la transmission du signal de communication reçu à une fréquence radio (RF) l'unité.

Un problème se pose toutefois avec les terminaux existants en ce qui concerne la réception multimédia, par exemple du type télévision en distribution. En effet les signaux multimédia sont dans une fréquence relativement basse, de l'ordre de 400 à 850 MHz et pour améliorer la réception, en particulier dans les zones où le signal est faible, il est souhaitable de relier à l'antenne de réception multimédia une ligne conductrice présentant selon une direction une longueur aussi grande que possible. La réalisation d'une ligne conductrice de grande longueur est difficilement compatible avec un faible encombrement du terminal.

En outre, pour améliorer le fonctionnement du terminal, il est souhaitable de réaliser un bon découplage entre l'antenne de téléphonie cellulaire et l'antenne de réception multimédia.

### OBJET DE L'INVENTION

Un but de l'invention est de proposer un terminal de téléphonie cellulaire et de réception multimédia dont la réception multimédia est améliorée tout en minimisant l'encombrement global du terminal et le couplage entre l'antenne de téléphonie cellulaire et l'antenne de réception multimédia.

### RESUME DE L'INVENTION

En vue de la réalisation de ce but, on propose selon l'invention, un terminal de téléphonie cellulaire et de réception multimédia du type rappelé ci-dessus dans lequel l'antenne de téléphonie cellulaire est disposée au voisinage d'un petit côté d'une partie de boîtier accolé à l'autre partie de boîtier tandis que l'antenne de réception multimédia est disposée au voisinage d'un petit côté opposé, et l'antenne de réception multimédia est reliée à une ligne conductrice s'étendant de façon continue le long de deux grands côtés des parties de boîtier.

Ainsi, pour une position déployée du terminal la ligne conductrice a une longueur utile voisine du double de la longueur d'une partie de boîtier, ce qui améliore la réception multimédia tout en préservant un encombrement minimal du terminal et un découplage optimum entre l'antenne multimédia et l'antenne de téléphonie cellulaire.

Selon un mode de réalisation avantageux de l'invention, les parties de boîtier sont reliées de façon articulée selon une direction parallèle au petit côté selon lequel elles sont accolées l'une à l'autre. En disposant les parties de boîtier selon un angle différent de 180° pour une position déployée, on obtient alors une position stable du terminal lorsqu'il est posé sur une surface plane, ce qui améliore le confort de visionnage des programmes multimédia.

Selon un autre aspect avantageux de l'invention, les parties de boîtier sont reliées de façon articulée selon une direction perpendiculaire au petit côté selon lequel elles sont accolées l'une à l'autre. Ainsi, tout en maintenant l'une des parties de boîtier à plat sur une surface, il est possible d'incliner l'autre partie vers l'utilisateur, ce qui améliore le confort de visionnage.

### BREVE DESCRIPTION DES DESSINS

D'autres caractéristiques et avantages de l'invention ressortiront à la lecture de la description qui suit d'un mode de deux modes de réalisation particuliers non limitatifs de l'invention en référence aux figures ci-jointes parmi lesquelles :
- la figure 1 est une vue en perspective schématique d'un premier mode de réalisation de l'invention en position rétractée,
- la figure 2 est une vue en perspective schématique du premier mode de réalisation de l'invention en position déployée,
- la figure 3 est une vue en perspective schématique d'un second mode de réalisation de l'invention en position déployée.

### DESCRIPTION DETAILLEE DE L'INVENTION

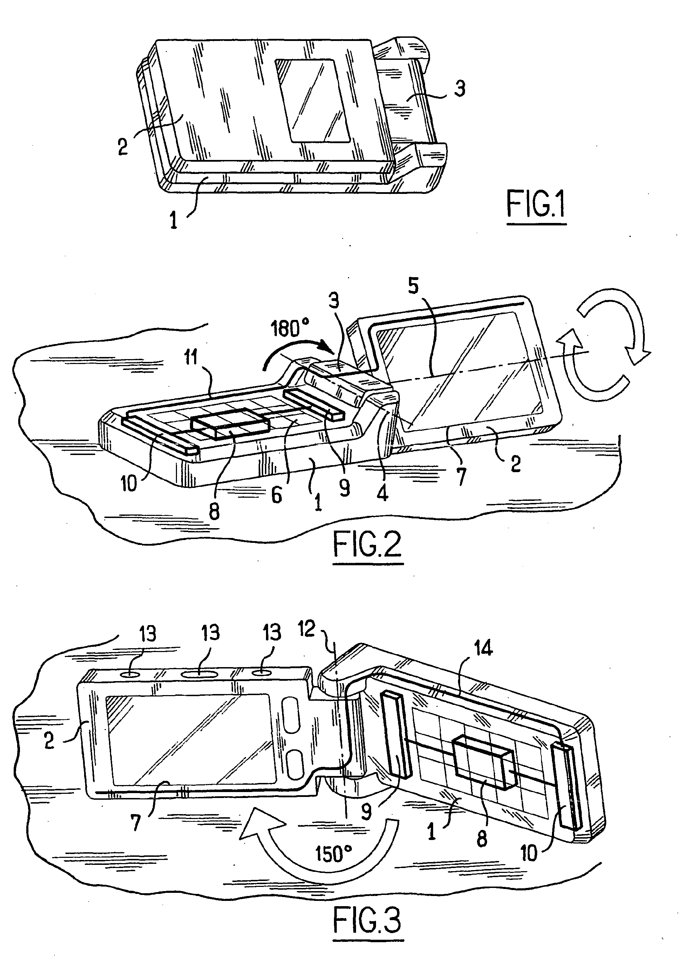

En référence aux figures 1 et 2, le terminal de téléphonie cellulaire et de réception multimédia selon le premier mode de réalisation comporte une première partie de boîtier 1 et une deuxième partie de boîtier 2 ayant toutes les deux une forme générale parallélépipédique avec des faces principales rectangulaires. Les parties de boîtier sont réunies par un organe intermédiaire d'articulation 3 monté pour pivoter sur la partie de boîtier 1 autour d'un axe d'articulation 4 s'étendant au voisinage d'un petit côté d'une face principale de la partie de boîtier 1 selon une direction parallèle à ce petit côté. La seconde partie de boîtier 2 est montée sur l'organe intermédiaire d'articulation 3 pour pivoter autour d'un axe 5 s'étendant dans un plan de symétrie longitudinal des parties de boîtier, c'est-à-dire que la seconde partie de boîtier 2 est reliée de façon articulée selon une direction perpendiculaire au petit côté selon lequel les parties de boîtier sont articulées l'une à l'autre.

De façon connue en soi, la partie de boîtier 1 comporte un clavier 6 et la partie de boîtier 2 comporte un écran 7, l'un et l'autre reliés de façon connue en soi à une unité de traitement 8 reliée d'une part à une antenne de téléphonie cellulaire 9 et d'autre part à une antenne de réception multimédia 10.

Selon l'invention, l'antenne de téléphonie cellulaire est disposée au voisinage du petit côté de la première partie de boîtier 1 accolé à la seconde partie de boîtier 2 tandis que l'antenne de réception multimédia 10 est disposée au voisinage d'un côté opposé, c'est-à-dire à une extrémité de l'ensemble du boîtier. En outre, l'antenne multimédia 10 est reliée à une ligne conductrice 11 qui s'étend de façon continue le long de deux grands côtés de deux parties de boîtier 1 et 2. On notera à ce propos que pour permettre une continuité de la ligne conductrice 11 en particulier au niveau des articulations, celle-ci suit un contour sinueux mais la longueur utile maximale obtenue lorsque le boîtier est en position complètement déployée comme illustré sur la figure 2 est égale à la longueur prise selon une projection sur une direction longitudinale de la partie de boîtier 1, c'est-à-dire deux fois la longueur de chaque partie de boîtier dans le mode de réalisation de la figure 2.

A partir de la position totalement rétractée du boîtier dans laquelle les deux parties de boîtier sont superposées comme illustré par la figure 1, l'organe intermédiaire d'articulation 3 est tout d'abord pivoté d'un angle de 180° autour de l'axe 4 comme illustré par la flèche en trait épais sur là figure 2 puis la partie de boîtier 2 est inclinée autour de l'axe 5 comme illustré par les flèches en trait double sur la figure 2. Ainsi qu'on le comprendra aisément lorsque la partie de boîtier 1 est à plat sur une surface l'angle maximal d'inclinaison de la partie de boîtier 2 dépend de la distance entre l'axe 5 et la surface sur laquelle repose la partie de boîtier 1.

Si l'on veut augmenter l'inclinaison de l'écran 7 on peut également prévoir un verrouillage de l'orientation de la partie de boîtier 2 par rapport à la partie de boîtier 1. Les deux parties de boîtier sont alors inclinées dans des directions opposées et reposent sur la surface support le long de deux arêtes longitudinales opposées.

La figure 3 illustre un second mode de réalisation pour lequel les références numériques identiques à celles de la figure 2 ont été utilisées pour les éléments correspondants. Dans ce mode de réalisation, la seconde partie de boîtier 2 est montée directement sur la partie de boîtier 1 en étant mobile par rapport à celle-ci seulement autour d'un axe d'articulation 12 disposé de la même façon que l'axe d'articulation 4 du premier mode de réalisation. Lors d'un visionnage d'un programme multimédia, le terminal est de préférence disposé avec les parties de boîtier dans le prolongement l'une de l'autre en formant un angle, par exemple un angle d'environ 150° comme illustré sur la figure 3. Le terminal est alors mis en appui sur une surface support avec l'écran 7 disposé verticalement. Pour faciliter la commande de la fonction multimédia du terminal, la partie de boîtier 2 est alors de préférence équipée sur un de ses côtés de touches de commande 13.

Dans l'exemple illustré de ce mode de réalisation, l'antenne multimédia 10 est reliée à une ligne conductrice 14 qui s'étend le long d'un côté longitudinal de la partie de boîtier 1 puis traverse l'articulation entre la partie de boîtier 1 et la partie de boîtier 2 selon la direction de l'axe 12 et s'étend sur la seconde partie de boîtier 2 sur un côté opposé à la partie de boîtier 1. Lorsque la ligne conductrice 14 est réalisée sous forme d'un fil conducteur séparé, ceci permet de soumettre la ligne conductrice 14 à des contraintes mécaniques plus faibles lors des manoeuvres d'ouverture et de fermeture du terminal.

On remarquera que dans ce mode de réalisation, en raison de l'angle formé entre les parties de boîtier, la longueur utile de la ligne conductrice est légèrement inférieure à deux fois la longueur de la partie de boîtier 1.

Bien entendu, l'invention n'est pas limitée aux modes de réalisation décrits et on peut y apporter des variantes de réalisation sans sortir du cadre de l'invention tel que défini par les revendications.

En particulier, bien que dans les modes de réalisation illustrés les parties de boîtier soient articulées l'une par rapport à l'autre, on peut également prévoir des parties de boîtier montées de façon coulissante l'une par rapport à l'autre selon une direction longitudinale des faces principales.

Bien que l'invention ait été illustrée avec une ligne conductrice se présentant sous forme d'un fil conducteur relié à l'antenne multimédia 10, la ligne conductrice peut être constituée par le plan de masse du terminal.

## Revendications

1. Terminal de téléphonie cellulaire et de réception multimédia comprenant un boîtier comportant deux parties de boîtier (1, 2) ayant une forme générale parallélépipédique avec des faces principales rectangulaires, les deux parties de boîtier comportant des moyens de liaison (3) pour que les deux parties de boîtier soient mobiles l'une par rapport à l'autre entre une position rétractée dans laquelle les deux parties de boîtier sont superposées et une position déployée dans laquelle les deux parties de boîtier sont dans le prolongement l'une de l'autre en étant accolées selon un petit côté des faces principales, le terminal comportant en outre une unité de traitement (8) disposée dans une des parties de boîtier (1) et reliée à une antenne de téléphonie cellulaire (9) et à une antenne de réception de signaux multimédia (10) à une fréquence de l'ordre de 400 à 850 MHz, lesdites antennes sont logées dans la même partie de boîtier (1) et disposées au voisinage de deux côtés opposés de cette partie de boîtier, **caractérisé en ce que** l'antenne de téléphonie cellulaire (9) est disposée au voisinage d'un petit côté accolé à l'autre partie de boîtier (2) tandis que l'antenne de réception multimédia (10) est disposée au voisinage d'un petit côté opposé, et **en ce que** l'antenne multimédia est reliée à une ligne conductrice (11 ; 14) s'étendant de façon continue le long de deux grands côtés des deux parties de boîtier.

2. Terminal selon la revendication 1, **caractérisé en ce que** les parties de boîtier sont reliées de façon articulée pour pivoter autour d'un axe d'articulation (4 ; 12) s'étendant selon une direction parallèle au petit côté selon lequel les parties de boîtier sont accolées.

3. Terminal selon la revendication 2, **caractérisé en ce qu'**il comporte des boutons de commande (13) disposés le long d'au moins un grand côté d'une partie de boîtier.

4. Terminal selon la revendication 1 ou la revendication 2, **caractérisé en ce que** les parties de boîtier sont reliées de façon articulée autour d'un axe (5) s'étendant selon une direction perpendiculaire au petit côté selon lequel les parties de boîtier sont accolées l'une à l'autre.

5. Terminal selon la revendication 4, **caractérisé en ce que** l'axe d'articulation (5) s'étend dans un plan de symétrie longitudinal des parties de boîtier.

## Claims

1. Cellular telephony and multimedia reception terminal comprising a housing with two housing parts (1, 2) having a general parallelepiped shape with rectangular main sides, the two housing parts having connection means (3) so that the two housing parts are mobile, the one with respect to the other, between a retracted position, in which the two housing parts overlap each other, and an extended position, in which the two housing parts are in the prolongation of each other by being put side-by-side along a small side of the main sides, the terminal further comprising a processing unit (8) that is arranged in one of the housing parts (1) and connected to a cellular telephony antenna (9) and to an antenna for receiving multimedia signals (10) at a frequency of the order of 400 to 850 MHz, said antennas being arranged in the same housing part (1) and arranged in the neighborhood of two opposite sides of this housing part, **characterized in that** the cellular telephony antenna (9) is arranged in the neighborhood of a small side that is put next to the other housing part (2) while the multimedia reception antenna (10) is arranged in the neighborhood of an opposite small side, and **in that** the multimedia antenna is connected to a conducting line (11; 14) that stretches in a continuous manner along two large sides of the two housing parts.

2. Terminal according to claim 1, **characterized in that** the housing parts are connected in an articulated manner so as to pivot around an articulation axis (4; 12) that stretches along a direction that is parallel to the small side, along which the housing parts are put side-by-side.

3. Terminal according to claim 2, **characterized in that** it comprises control buttons (13) arranged along at least one large side of a housing part.

4. Terminal according to claim 1 or claim 2, **characterized in that** the housing parts are connected in an articulated manner around an axis (5) that stretches along a direction that is perpendicular to the small side, along which the housing parts are put side-by-side.

5. Terminal according to claim 4, **characterized in that** the articulation axis (5) stretches in a longitudinal symmetry plane of the housing parts.

## Patentansprüche

1. Endgerät für Mobilfunktelefonie und Multimediaempfang umfassend ein Gehäuse mit zwei Gehäuseteilen (1, 2), die eine allgemeine quaderförmige Form mit rechteckigen Hauptseiten aufweist, wobei die zwei Gehäuseteile Verbindungsmittel (3) aufweisen, so dass die zwei Gehäuseteile zwischen einer eingezogenen Position, in welcher die zwei Gehäuseteile sich überlappen, und einer ausgezogenen Position, in welcher die zwei Gehäuseteile in der Verlängerung voneinander sind, indem sie über eine kleine Seite der Hauptseiten nebeneinander sind, mobil in Bezug aufeinander sind, wobei das Endgerät weiterhin eine Verarbeitungseinheit (8) umfasst, die in einem der Gehäuseteile (1) angeordnet und mit einer Mobilfunkantenne (9) und einer Antenne zum Empfangen von Multimediasignalen (10) in einer Frequenz in der Größenordnung von 400 bis 850 MHz verbunden ist, wobei die Antennen im selben Gehäuseteil (1) aufgenommen und in der Nachbarschaft von zwei diesem Gehäuseteil entgegengesetzten Seiten angeordnet sind, **dadurch gekennzeichnet, dass** die Mobilfunkantenne (9) in der Nachbarschaft einer kleinen Seite angeordnet ist, die am anderen Gehäuseteil (2) angrenzt, während die Antenne zum Multimediaempfang (10) in der Nachbarschaft einer entgegengesetzten kleinen Seite angeordnet ist, und **dadurch**, dass die Multimediaantenne mit einer leitenden Linie (11; 14) verbunden ist, die auf kontinuierliche Weise entlang zwei großen Seiten der zwei Gehäuseteile verläuft.

2. Gerät nach Anspruch 1, **dadurch gekennzeichnet, dass** die Gehäuseteile beweglich miteinander verbunden sind, um um eine Schwenkachse (4; 12) schwenken zu können, die entlang einer Richtung verläuft, die parallel zur kleinen Seite ist, an welcher die Gehäuseteile angrenzen.

3. Endgerät nach Anspruch 2, **dadurch gekennzeichnet, dass** es Steuerknöpfe (13) umfasst, die entlang mindestens einer großen Seite eines Gehäuseteils angeordnet sind.

4. Endgerät nach Anspruch 1 oder nach Anspruch 2, **dadurch gekennzeichnet, dass** die Gehäuseteile beweglich um eine Achse (5) miteinander verbunden sind, die entlang einer Richtung verläuft, die senkrecht zur kleinen Seite ist, an der die Gehäuseteile aneinander angrenzen.

5. Endgerät nach Anspruch 4, **dadurch gekennzeichnet, dass** die Schwenkachse (5) in einer longitudinalen Symmetrieebene der Gehäuseteile verläuft.
